# DEMANDE DE BREVET EUROPEEN

(11) **EP 0 524 858 A1**
(43) Date de publication de la demande: **27.01.1993**
(21) Numéro de dépôt: 92402013.4
(22) Date de dépôt: 10.07.1992
(51) Int. Cl.: C04B 35/58, C08G 79/08, C01B 21/064

(54) **Procédé de préparation de céramiques en nitrure de bore à partir de précurseurs dérivés de l'hydrazine**

(30) Priorité: 17.07.1991 FR 9109046
(71) Demandeur: ELF ATOCHEM S.A., F-92800 Puteaux (FR)
(72) Inventeur: Majoral, Jean-Pierre, F-31520 Ramonville (FR); Brodie, Nancy, F-31400 Toulouse (FR); Van der Does, Tom, NL-3648 AP Wilnis (NL)
(74) Mandataire: Rochet, Michel

(57) **Abrégé**

L'invention concerne des céramiques en nitrure de bore et leurs précurseurs.

Ces précurseurs sont obtenus par réaction d'hydrazine substituée par des groupements organosilyle avec du trichlorure de bore.

## Description

L'invention a pour objet un procédé de préparation de céramiques en nitrure de bore à partir de précurseurs dérivés de l'hydrazine.

L'invention a également pour objet les précurseurs de céramiques obtenus dans la mise en oeuvre de ce procédé.

Ce procédé est caractérisé en ce qu'il consiste
**1°/** à faire réagir : 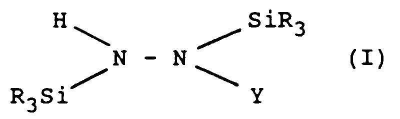 avec m BCl₃ dans des conditions permettant de former un précurseur comportant des motifs de formule 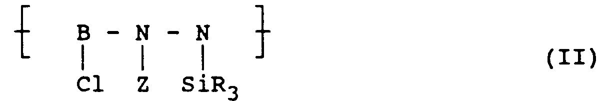 formules dans lesquels les symboles R, qui peuvent être identiques ou différents, peuvent représenter un radical organique renfermant jusqu'à 12 atomes de carbone et pouvant notamment être choisi parmi les radicaux alkyle, cycloalkyle et aryle, le symbole Z peut représenter H ou -SiR₃, Y peut représenter Li ou -SiR₃ et m peut être égal à 1 ou 2.
**2°/** à soumettre le précurseur de formule (II) à une pyrolyse jusqu'à obtention d'un produit contenant BN.

Selon une variante de ce procédé, (I) et BCl₃ réagissent en présence d'une amine tertiaire en particulier dans le but de piéger HCl formé au cours de la réaction conduisant au précurseur (II) sous forme de chlorhydrate d'amine.

Dans les formules I et II, le radical R est avantageusement un radical alkyle ayant de 1 à 4 atomes de carbone et, de préférence, un radical méthyle.

L'amine tertiaire peut être choisie dans une large gamme de produits répondant à cette définition. On utilise avantageusement la triéthylamine en tant qu'amine tertiaire.

La quantité d'amine tertiaire, lorsqu'elle est utilisée, peut représenter un mole par mole de BCl₃.

Dans le procédé conforme à l'invention, mis en oeuvre sans amine tertiaire, le mélange (I) + BCl₃ est généralement effectué à basse température (de préférence inférieure à - 50 °C et plus précisément comprise entre -70 et -100°C) en milieu solvant organique, lequel peut par exemple être choisi dans le groupe constitué par les alcanes liquides à la température de la réaction, tel que le pentane. Le séjour à cette température est en général compris entre dix minutes et une heure.

Après retour aux alentours de 0°C et élimination du solvant, éventuellement sous pression réduite, on obtient le précurseur de formule II sous forme de solide blanc, soluble par exemple dans le pentane ou le toluène.

Ce solide peut être directement pyrolysé, par exemple sous atmosphère d'argon ou d'ammoniac à une température généralement comprise entre 800 et 1500°C et de préférence entre 900 et 1200°C et conduit ainsi à une céramique contenant du nitrure de bore.

On peut également faire subir au précurseur avant pyrolyse un prétraitement, par exemple entre 120 et 150°C, ce prétraitement conduisant à un solide blanc vitreux soluble ou encore soumettre ce dernier solide à un nouveau traitement à température plus élevée, par exemple entre 200 et 250°C, conduisant à un solide blanc vitreux soluble dans le pentane ou le toluène. On peut également obtenir un solide blanc insoluble en laissant le solide précédent à température ambiante pendant quelques heures.

Lorsqu'on effectue la réaction en présence d'amine tertiaire, il se forme un précipité de chlorhydrate d'amine, qui peut être éliminé par exemple par filtration.

Le précurseur se présente alors en général sous forme de gel, un traitement entre 120 et 150°C conduisant au solide blanc vitreux et soluble, mentionné précédemment. Ce précurseur peut être pyrolysé dans la zone de température indiquée précédemment.

On observe ainsi que le procédé conforme à l'invention conduit à des précurseurs qui, par des traitements appropriés, sont plus ou moins réticulés et peuvent par conséquent être adaptés aux conditions de mise en oeuvre avant le passage au stade final de produit totalement insoluble.

L'exemple suivant illustre l'invention.

### EXEMPLE

**1.a./** On dissout 1,76 g de tris(trimethylsilyl)hydrazine dans 30 ml de pentane à température ambiante et refroidit la solution à -80°C.
**1.b./** On introduit dans cette solution refroidie une solution de 0,70 g de BCl₃ dans 10 ml de pentane. Après dix minutes, l'ensemble est ramené à température ambiante. On élimine le solvant et on obtient un solide blanc.
**1.c./** Le solide blanc est chauffé à 140°C pendant deux heures sous pression réduite à 1 mm de mercure. Après ce traitement, on obtient un nouveau solide blanc vitreux (II) soluble dans le pentane ou le toluène.
**2.a./** On peut également faire réagir une solution de 2,15 g de tris(trimethylsilyl)hydrazine et 0,90 g de triéthylamine dans 30 ml de pentane avec une solution de 1,01 g de BCl₃ dans 10 ml de pentane pour obtenir un gel (mêmes conditions expérimentales que celles décrites ci-dessus).
**2.b./** Le gel est chauffé à 140°C pendant deux heures sous pression réduite à 1 mm de mercure. Après ce traitement, on obtient un solide blanc vitreux (II) soluble.
**3./** La pyrolyse de II (à 1000°C pendant huit heures sous courant d'ammoniac ou Argon) conduit à du nitrure de bore avec un rendement de 25 %.
**4./** Si, à l'issue de l'opération décrite sous 1.b./, on laisse le solide soluble obtenu à température ambiante pendant une dizaine d'heures, on observe la transformation en un nouveau solide blanc insoluble. Ce solide blanc est chauffé à 140°C pendant deux heures sous pression réduite à 1 mm de mercure. La pyrolyse du solide blanc obtenu conduit à un rendement en nitrure de bore de 32 à 37 %.

## Revendications

1. Procédé de préparation de céramiques en nitrure de bore, caractérisé en ce qu'il consiste :
**1°/** à faire réagir : 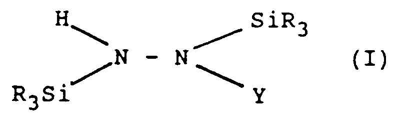 avec m.BCl₃ dans des conditions permettant de former un précurseur comportant des motifs de formule 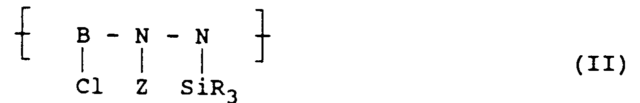 formules dans lesquels les symboles R, qui peuvent être identiques ou différents, peuvent représenter un radical organique renfermant jusqu'à 12 atomes de carbone et pouvant notamment être choisi parmi les radicaux alkyle, cycloalkyle et aryle, le symbole Z peut représenter H ou -SiR₃, Y peut représenter Li ou -SiR₃ et m peut être égal à 1 ou 2.
**2°/** à soumettre le précurseur de formule (II) à une pyrolyse jusqu'à obtention d'un produit contenant BN.

2. Procédé selon la revendication 1, caractérisé en ce que la réaction 1 est effectuée en présence d'une amine tertiaire.

3. Procédé selon la revendication 2, caractérisé en ce que l'amine tertiaire est utilisée à raison d'environ une mole d'amine par mole de BCl₃.

4. Procédé selon l'une quelconque des revendications 2 ou 3, caractérisé en ce que l'amine tertiaire la triéthylamine.
